# EUROPÄISCHE PATENTSCHRIFT

(11) **EP 3 053 492 B1**
(45) Veröffentlichungstag und Bekanntmachung des Hinweises auf die Patenterteilung: **10.10.2018**
(21) Anmeldenummer: 15001006.4
(22) Anmeldetag: 09.04.2015
(51) Int. Cl.: A47J 31/44, A47J 31/40

(54) **VORRICHTUNG ZUR HERSTELLUNG EINES GETRÄNKS MITTELS EINER PORTIONSKAPSEL**
DEVICE FOR PREPARING A DRINK USING A PORTION CAPSULE
DISPOSITIF DE PRODUCTION D'UNE BOISSON À L'AIDE D'UNE CAPSULE

(30) Priorität: 09.02.2015 DE 202015100609 U
(43) Veröffentlichungstag der Anmeldung: 10.08.2016
(73) Patentinhaber: Eugster/Frismag AG, 8580 Amriswil (CH)
(72) Erfinder: Yesil, Saadettin, 78462 Konstanz (DE); Riessbeck, Wolfgang, 8597 Landschlacht (CH); Hug, Yves, 4800 Zofingen (CH)
(74) Vertreter: Loock, Jan Pieter

(56) Entgegenhaltungen:
- WO-A1-2014/127848
- DE-U1-202012 006 928

## Beschreibung

### Stand der Technik

Die Erfindung geht aus von einer Vorrichtung zur Herstellung eines Getränks mittels einer Portionskapsel, wobei die Vorrichtung eine mit einer Portionskasel befüllbare Brühvorrichtung, einen zumindest teilweise unterhalb der Brühvorrichtung angeordneten und mit einem Gehäuse der Brühvorrichtung mittels einer ersten Koppeleinrichtung lösbar gekoppelte Kapselauffangbehälter und einen mit dem Kapselauffangbehälter mittels einer zweiten Koppeleinrichtung lösbar gekoppelte Tropfschale aufweist.

Solche Vorrichtungen sind aus dem Stand der Technik wohlbekannt. Beispielsweise offenbart die Druckschrift WO 2014 / 127 848 A1 eine Brühvorrichtung zum Extrahieren einer Portionskapsel in einer Brühkammer. Nach dem Extraktionsvorgang wird die extrahierte Portionskapsel dabei aus der Brühvorrichtung ausgeworfen und fällt durch die Schwerkraft in einen unterhalb der Brühvorrichtung angeordneten Kapselauffangbehälter. Um den Kapselauffangbehälter bei Bedarf leeren zu können, ist der Auffangbehälter typischerweise vom übrigen Teil der Vorrichtung abnehmbar und portabel ausgestaltet. Die Altkapseln können sodann unmittelbar aus dem Auffangbehälter entsorgt werden. Zudem weist die Vorrichtung eine Tropfschale, auf welcher während des Extraktionsvorgangs ein Getränkeauffangbehälter, wie beispielsweise eine Tasse, angeordnet wird, auf, welche unterhalb eines Getränkeausgusses der Vorrichtung angeordnet ist und mit dem Kapselauffangbehälter verbunden ist. Zum Leeren der Tropfschale ist die Tropfschale vom Kapselauffangbehälter lösbar und portabel ausgestaltet.

### Offenbarung der Erfindung

Es ist eine Aufgabe der vorliegenden Erfindung eine Vorrichtung der eingangs genannten Art bereitzustellen, bei welcher das Abnehmen und Einsetzen des Auffangbehälters und der Tropfschale für einen Benutzer einfacher, zuverlässiger und komfortabler durchführbar ist. Insbesondere soll sichergestellt werden, dass wahlweise entweder nur die Tropfschale oder die Tropfschale gemeinsam mit dem Kapselauffangbehälter in einfacher Weise von der übrigen Vorrichtung abnehmbar ist.

Die Aufgabe der vorliegenden Erfindung wird gelöst mit einer Vorrichtung zur Herstellung eines Getränks mittels einer Portionskapsel, wobei die Vorrichtung eine mit einer Portionskasel befüllbare Brühvorrichtung, einen zumindest teilweise unterhalb der Brühvorrichtung angeordneten und mit einem Gehäuse der Brühvorrichtung mittels einer ersten Koppeleinrichtung lösbar gekoppelten Kapselauffangbehälter und einen mit dem Kapselauffangbehälter mittels einer zweiten Koppeleinrichtung lösbar gekoppelte Tropfschale aufweist, wobei ferner die erste und die zweite Koppeleinrichtung derart ausgebildet sind, dass sich bei einer Kraftbeaufschlagung der Tropfschale entlang einer vom Gehäuse weg gerichteten Horizontalrichtung ausschließlich die zweite Koppeleinrichtung löst, während sich bei einem Anheben der Tropfschale entlang einer zur Brühvorrichtung gerichteten Vertikalrichtung ausschließlich die erste Koppeleinrichtung löst.

Die erfindungsgemäße Vorrichtung hat gegenüber dem Stand der Technik den Vorteil, dass die erste und die zweite Koppeleinrichtung derart ausgebildet sind, dass sich beim Abziehen der Tropfschale vom Gehäuse entlang der Horizontalrichtung ausschließlich die zweite Koppeleinrichtung löst, d.h. die Tropfschale wird vom Kapselauffangbehälter gelöst und der Kapselauffangbehälter verbleibt mittels der ersten Koppeleinrichtung am Gehäuse, während sich bei einem Anheben der Tropfschale in Vertikalrichtung ausschließlich die erste Koppeleinrichtung löst, d.h. die Tropfschale verbleibt mittels der zweiten Koppeleinrichtung am Kapselauffangbehälter und der Kapselauffangbehälter löst sich vom Gehäuse. Im ersten Fall wird also lediglich die Tropfschale entnommen, während im zweiten Fall die Tropfschale und der Kapselauffangbehälter gemeinsam entnommen werden. Der Benutzer der Vorrichtung kann somit durch eine einfache Bewegung und einhändig entscheiden, ob er nur die Tropfschale oder die Tropfschale gemeinsam mit dem Kapselauffangbehälter vom Gehäuse lösen möchte. Der Bedienkomfort der erfindungsgemäßen Vorrichtung ist somit gegenüber den aus dem Stand der Technik bekannten Vorrichtungen wesentlich gesteigert. Unter den Begriff "Anheben der Tropfschale entlang der Vertikalrichtung" fällt im Sinne der vorliegenden Erfindung auch ein Anwinkeln oder Verkippen der Tropfschale, wenn hierdurch ein dem Gehäuse zugewandter Bereich der Tropfschale angehoben wird. Die erste Kopplungseinrichtung umfasst insbesondere eine Einrastvorrichtung.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass die Vorrichtung eine dritte Koppeleinrichtung aufweist, welche derart ausgebildet ist, dass lediglich beim Anheben der Tropfschale entlang der Vertikalrichtung zusätzlich zur Kopplung der zweiten Koppeleinrichtung eine Kopplung zwischen dem Kapselauffangbehälter und der Tropfschale mittels der dritten Koppeleinrichtung herbeigeführt wird. In vorteilhafter Weise wird durch die dritte Koppeleinrichtung eine zusätzliche Kopplung zwischen der Tropfschale und dem Kapselauffangbehälter herbeigeführt, wenn die Tropfschale und der Kapselauffangbehälter gemeinsam entnommen werden soll und zu diesem Zweck die zweite Koppeleinrichtung gelöst wird. Ein unbeabsichtigtes Lösen der Tropfschale von dem Kapselauffangbehälter während oder nach dem Entnehmen derselben wird somit verhindert.

Gemäß einer weiteren bevorzugten Ausführungsform der vorliegenden Erfindung ist vorgesehen, dass das Gehäuse einen feststehenden Untersatz für den Kapselauffangbehälter aufweist, wobei die erste Koppeleinrichtung wenigstens eine am Untersatz ausgebildete Rastöffnung und wenigstens eine an einer Unterseite des Kapselauffangbehälters ausgebildete Rastnase, welche im gekoppelten Zustand entgegen der Vertikalrichtung in die wenigstens eine Rastöffnung eingreift, umfasst. Die wenigstens eine Rastnase weist auf einer dem Gehäuse zugewandten Seite insbesondere eine Einführschräge auf, wobei die Rastnase vorzugsweise eine entgegen der Vertikalrichtung nach unten weisende Haifischzahnform aufweist. In vorteilhafter Weise wird beim Einschieben des Kapselauffangbehälters in das Gehäuse automatisch eine lösbare Verbindung zwischen dem Kapselauffangbehälter und dem Gehäuse mittels der ersten Koppeleinrichtung hergestellt, indem die Rastnase in die Rastöffnung einrastet. Denkbar ist, dass die Rastnase hierfür federelastisch ausgebildet ist.

Gemäß einer weiteren bevorzugten Ausführungsform der vorliegenden Erfindung ist vorgesehen, dass die wenigstens eine Rastnase entlang der Horizontalrichtung in einem der Tropfschale zugewandten vorderen Bereich des Kapselauffangbehälters, bevorzugt in der vorderen Hälfte des Kapselauffangbehälters und besonders bevorzugt im vorderen Drittel des Kapselauffangbehälters ausgebildet ist. Hierdurch wird der Vorteil erzielt, dass beim Anheben der Tropfschale entlang der Vertikalrichtung die Rastnase aus der Rastöffnung herausgehoben wird und somit die erste Koppeleinrichtung gelöst wird. Wenn hingegen die Tropfschale vom Benutzer lediglich entlang der Horizontalrichtung aus dem Gehäuse herausgezogen wird, verbleibt die Rastnase in der Rastöffnung und die erste Koppeleinrichtung wird nicht gelöst. Im Gegenteil, durch die haifischzahnförmige Ausbildung der Rastnase wird der Formschluss zwischen der Rastnase und der Wandung der Rastöffnung zuverlässig aufrechterhalten. Das Ziehen an der Tropfschale kann somit kein Öffnen der ersten Koppeleinrichtung bewirken, so dass sich irgendwann - wenn die Zugkraft ausreichend groß wird - die zweite Koppelrichtung auskuppelt.

Gemäß einer weiteren bevorzugten Ausführungsform der vorliegenden Erfindung ist vorgesehen, dass die erste Kopplungseinheit, die zweite Kopplungseinheit und die dritte Kopplungseinheit in Vertikalrichtung einander zumindest teilweise oder vollständig überlappen. In vorteilhafter Weise wird durch das Anheben oder Anwinkeln der Tropfschale die erste Kopplungseinheit gelöst und die dritte Kopplungseinheit geschlossen. Dieser Mechanismus lässt sich besonders zuverlässig realisieren, wenn die drei Kopplungseinheiten in Horizontalrichtung möglich eng beieinander liegen.

Gemäß einer weiteren bevorzugten Ausführungsform der vorliegenden Erfindung ist vorgesehen, dass die zweite Koppeleinrichtung wenigstens ein an der Tropfschale ausgebildetes Rastelement und ein am Kapselauffangbehälter ausgebildetes Gegenrastelement umfasst, wobei im gekoppelten Zustand das Rastelement entlang einer sowohl zur Horizontalrichtung als auch zur Vertikalrichtung senkrechten Querrichtung in das Gegenrastelement formschlüssig eingreift. Vorteilhafterweise bleibt die zweite Koppeleinrichtung somit beim Anheben oder Anwinkeln der Tropfschale gekoppelt. Beim Anwinkeln der Tropfschale fungiert die Kopplung zwischen Rastelement und Gegenrastelement vorzugsweise zudem als Drehachse zwischen der Tropfschale und dem Kapselauffangbehälter.

Gemäß einer weiteren bevorzugten Ausführungsform der vorliegenden Erfindung ist vorgesehen, dass die Tropfschale einen Vorsprung aufweist, welcher im gekoppelten Zustand der zweiten Koppeleinrichtung in eine an der Front des Kapselauffangbehälters ausgebildeten Öffnung eingeschoben ist, wobei an jeder Seite des Vorsprungs jeweils ein Rastelement ausgebildet ist und wobei in einer seitlichen Wandung der Öffnung jeweils ein Gegenrastelement in Form einer Ausnehmung und insbesondere einer vertikal verlaufenden Nut ausgebildet ist. Die Ausbildung des Gegenrastelements als vertikal verlaufende Nut hat den Vorteil, dass beim Anheben bzw. Anwinkeln der Tropfschale kein Auskuppeln der zweiten Kopplungseinrichtung erfolgt, da sich das Rastelement in vertikaler Richtung frei in der Nut bewegen kann. Denkbar wäre alternativ auch, dass der Vorsprung mit den Rastelementen am Kapselauffangbehälter und das Gegenrastelement an der Tropfschale ausgebildet ist.

Gemäß einer weiteren bevorzugten Ausführungsform der vorliegenden Erfindung ist vorgesehen, dass der Vorsprung auf seiner Oberseite eine Auswölbung und die Wandung der Öffnung an seiner oberen Vorderkante einen Hinterschnitt derart umfasst, dass nur bei einem Anheben der Tropfschale entlang der Vertikalrichtung die Auswölbung den Hinterschnitt hintergreift und gegenüber der Horizontalrichtung einen Formschluss bewirkt. Das Anheben bzw. Anwinkeln der Tropfschale bewirkt somit ein Hintergreifen des Hinterschnitts durch die Auswölbung und somit eine sichere Verbindung zwischen Tropfschale und Kapselauffangbehälter.

Gemäß einer weiteren bevorzugten Ausführungsform der vorliegenden Erfindung ist vorgesehen, dass die beiden Rastelemente jeweils an einem in die seitliche Wandung des Vorsprungs eingelassenen federelastisch ausgebildeten Seitenarm angeordnet sind.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- Figuren 1a bis 1c: zeigen schematische Schnittbildansichten einer Vorrichtung gemäß einer beispielhaften Ausführungsform der vorliegenden Erfindung.
- Figuren 2a bis 2f: zeigen schematische Detailansichten der Vorrichtung gemäß der beispielhaften Ausführungsform der vorliegenden Erfindung.

### Ausführungsbeispiele der Erfindung

In den verschiedenen Figuren sind gleiche Teile stets mit den gleichen Bezugszeichen versehen und werden daher in der Regel auch jeweils nur einmal benannt bzw. erwähnt.

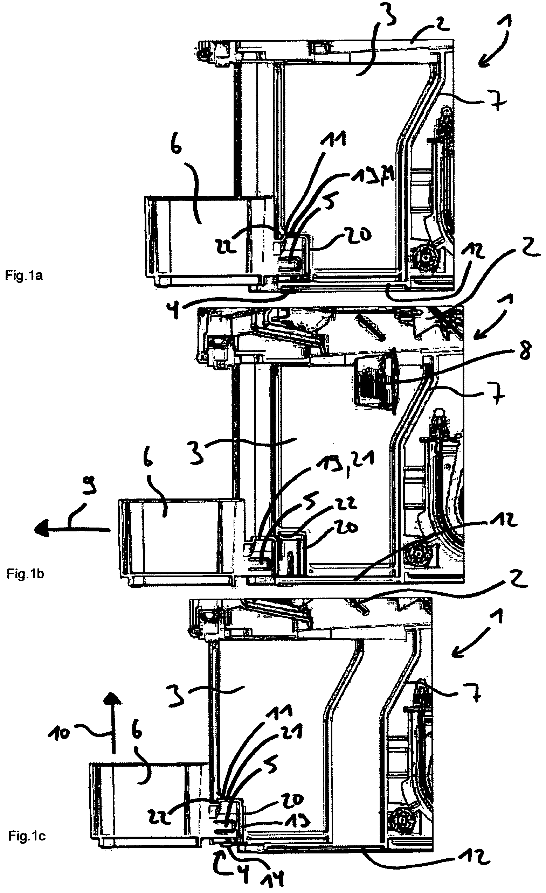

In **Figuren 1a und 1b** sind schematische Teilansichten einer Vorrichtung 1 zur Herstellung eines Getränks mittels einer Portionskapsel 8 gemäß einer beispielhaften Ausführungsform der vorliegenden Erfindung dargestellt. Die Vorrichtung 1 weißt eine nicht im Detail dargestellte Brühvorrichtung 2 mit einer Brühkammer auf.

Die Brühvorrichtung 2 entspricht vorzugsweise der in der Druckschrift WO 2013 / 143 974 A1 offenbarten Brühkammer aufweisend ein als Aufnahmeelement bzw. teilweise hohles Glockenelement ausgebildetes unbewegliches Brühkammerelement und ein als Verschlusselement bzw. Kolben ausgebildetes bewegliches Brühkammerelement. Das bewegliche ist relativ zum unbeweglichen Brühkammerelement entlang einer axialen Richtung zwischen einer Ladestellung, in welcher eine Portionskapsel 8 zum Befüllen der Brühvorrichtung 2 zwischen das bewegliche und unbewegliche Brühkammerelement eingeführt werden kann, und einer Extraktionsstellung, in welcher das bewegliche und unbewegliche Brühkammerelement einander derart angenähert sind, dass sie eine geschlossene Brühkammer zur Extraktion der in der Portionskapsel 8 befindlichen Getränkesubstanz bilden, bewegbar. Beim Überführen des beweglichen Brühkammerelements von der Ladestellung in die Extraktionsstellung wird die Portionskapsel 8 vorzugsweise an zwei Seiten, dem Kapseldeckel und dem Kapselboden, perforiert.

In der Extraktionsstellung wird sodann heißes Wasser unter Druck in die Brühkammer eingeleitet. Im Inneren der Portionskapsel 8 wechselwirkt das heiße Wasser mit der Getränkesubstanz, beispielsweise gemahlene und geröstete Kaffeebohnen, Instant-Kaffeepulver, Kakaopulver, Milchpulver und/oder Teeschnitt, so dass sich das herzustellende Getränk bildet. Das Getränk fließt aus der Portionskapsel 8 und wird ausgehend von der Brühkammer über einen Getränkeausguss in ein außerhalb der Vorrichtung 1 stehendes Getränkegefäß, beispielsweise eine Kaffee- oder Teetasse, geleitet. Das Getränkegefäß steht während des Extraktionsvorgangs auf einer Tropfschale 6, in welcher überschüssige oder vom Getränkeauslass abtropfende Flüssigkeit aufgefangen wird.

Nach dem Extraktionsvorgang wird das bewegliche Brühkammerelement von der Extraktionsstellung zurück in die Ladestellung verfahren. Hierbei wird die verbrauchte Portionskapsel 8 mittels eines Kapselauswerfers von dem beweglichen und/oder unbeweglichen Brühkammerelement gestreift und fällt in den unterhalb der Brühvorrichtung 2 angeordneten Kapselauffangbehälter 3. Die Brühvorrichtung 2 ist nun dazu bereit, bei Bedarf mit einer neuen Portionskapsel 8 befüllt zu werden. Im Kapselauffangbehälter 3 werden ferner die Altkapseln gesammelt.

Der Kapselauffangbehälter 3 ist mittels einer ersten Koppeleinrichtung 4 mit dem übrigen Gehäuse 7 der Vorrichtung 1 lösbar verbunden. Zum Entsorgen der Altkapseln ist der Kapselauffangbehälter 3 von dem übrigen Gehäuse 7 der Vorrichtung 1 somit durch Lösen der ersten Koppeleinrichtung 4 abnehmbar. Der Kapselauffangbehälter 3 steht im gekoppelten Zustand auf einem Untersatz 12 des Gehäuses 7. Die erste Koppeleinrichtung 4 umfasst zwei an der Unterseite des Kapselauffangbehälters 3 ausgebildete Rastnasen 14 und zwei korrespondierende im Untersatz 12 ausgebildete Rastöffnungen 13, in welche die Rastnasen 14 im gekoppelten Zustand eingreifen. Die Rastnasen 14 sind hierfür Haifischzahnförmig ausgebildet und weisen auf einer dem Gehäuse 7 zugewandten Seite eine Einführschräge 15 auf. Beim Einschieben des Kapselauffangbehälters 3 in das Gehäuse 7 rutschen die Rastnasen 14 somit auf den Untersatz 12 und rasten selbstständig in die Rastöffnungen 13 ein. Beim Herausziehen des Kapselauffangbehälters 3 bildet sich ein Formschluss zwischen den Rastnasen 14 und der Wandung der Rastöffnungen 13. Die Kopplung der ersten Koppeleinrichtung 4 kann somit nur durch ein Anheben des Kapselauffangbehälters 3, wodurch sich die Rastnasen 13 in Vertikalrichtung 10 aus den Rastöffnungen 13 herausheben, aufgehoben werden.

Die Tropfschale 6 ist mittels einer zweiten Koppeleinrichtung 5 mit dem Kapselauffangbehälter 3 lösbar verbunden. Zum bedarfsweisen Leeren der Tropfschale 6 kann durch Lösen der zweiten Koppeleinrichtung 5 die Tropfschale vom Kapselauffangbehälter 3 gelöst werden. Die Tropfschale 6 weist auf ihrer dem Kapselauffangbehälter 3 zugewandten Seite einen Vorsprung 19 auf, welcher im gekoppelten Zustand in eine korrespondierende Öffnung 20 am Kapselauffangbehälter 3 vorsteht. Die zweite Koppeleinrichtung 5 umfasst zwei Rastelemente 6, welche jeweils an einer Seite des Vorsprungs 19 ausgebildet sind, und in korrespondierende Gegenrastelemente 17 in der Wandung der Öffnung 20 eingreifen. Die beiden Rastelemente 6 sind dabei jeweils an einem in die seitliche Wandung des Vorsprungs 19 eingelassenen federelastisch ausgebildeten Seitenarm 23 angeordnet, während die Gegenrastelemente 17 jeweils eine als vertikal verlaufende Nut ausgebildete Ausnehmung umfassen. Im gekoppelten Zustand greifen die Rastelemente in die Nuten ein, wodurch ein Formschluss bezüglich der Horizontalrichtung 9 erzeugt wird. Die Kopplung der zweiten Koppelrichtung 5 wird dann aufgehoben, wenn durch Ziehen an der Tropfschale 6 in Horizontalrichtung 9 die Klemmkraft der federelastisch ausgebildeten Seitenarme 23 überwunden wird und sich somit die Rastelemente 6 aus den Gegenrastelementen 17 heben.

Die erste und zweite Koppeleinrichtung 4, 5 sind somit derart ausgebildet, dass sich bei einer Kraftbeaufschlagung der Tropfschale 6 entlang einer vom Gehäuse 7 weg gerichteten Horizontalrichtung 9 ausschließlich die zweite Koppeleinrichtung 5 löst und die erste Koppeleinrichtung 4 geschlossen bleibt, da die Rastnasen 14 gegenüber der Horizontalrichtung 9 formschlüssig in den Rastöffnungen 13 verbleiben, während sich bei einem Anheben der Tropfschale 6 entlang einer in Richtung der Brühvorrichtung 2 gerichteten Vertikalrichtung 10 ausschließlich die erste Koppeleinrichtung 4 löst, da die Rastnasen 14 aus den Rastöffnungen 13 gehoben werden, und die zweite Koppeleinrichtung 5 geschlossen bleibt. Das Anheben der Tropfschale 6 kann im Sinne der vorliegenden Erfindung auch ein Anwinkeln oder Verkippen der Tropfschale 6 umfassen, wenn hierdurch der dem Gehäuse 7 zugewandte Bereich der Tropfschale 6 angehoben wird und die Rastnasen 14 aus den Rastöffnungen 13 gehoben werden.

Der Benutzer kann somit die Vorrichtung 1 vergleichsweise einfach bedienen: Wenn nur die Tropfschale 6 entnommen werden soll, zieht der Benutzer einfach an der Tropfschale 6 in Horizontalrichtung 9, bis sich die Tropfschale 6 löst. Wenn hingegen die Tropfschale 6 zusammen mit dem Kapselauffangbehälter 3 entnommen werden soll, dann hebt er die Tropfschale 6 in Vertikalrichtung 10 etwas an, wodurch sich die erste Kopplungseinheit 4 löst, und kann sodann die Tropfschale 6 zusammen mit dem Kapselauffangbehälter 3 in Horizontalrichtung 3 herausziehen.

Zusätzlich zur ersten und zur zweiten Koppeleinrichtung 4, 5 weist die Vorrichtung 1 eine dritte Koppeleinrichtung 11 auf. Die dritte Koppeleinrichtung 11 ist in einem ungekoppelten Zustand, wenn die erste und die zweite Koppeleinrichtung 4, 5 jeweils geschlossen sind. Wenn die erste Koppeleinrichtung 4 geöffnet wird, weil der Benutzer die Tropfschale 6 anhebt, schließt sich die dritte Koppeleinrichtung 11 und sorgt somit für eine sichere Verbindung zwischen der Tropfschale 6 und dem Kapselauffangbehälter 3, wenn diese gemeinsam entnommen werden. Dies wird dadurch erreicht, dass der Vorsprung 19 auf seiner Oberseite eine Auswölbung 21 und die Wandung der Öffnung 20 an seiner oberen Vorderkante einen Hinterschnitt 22 umfasst. Die Auswölbung 21 und der Hinterschnitt 22 bilden gemeinsam die dritte Koppeleinrichtung 11, wobei beim Anheben der Tropfschale 6 entlang der Vertikalrichtung 10 die Auswölbung 21 den Hinterschnitt 22 hintergreift und gegenüber der Horizontalrichtung 9 einen Formschluss bewirkt.

In Figur 1a ist der Normalzustand dargestellt, in welchem die erste und die zweite Koppeleinrichtung 4, 5 geschlossen sind, während die dritte Koppeleinrichtung 11 gelöst ist. In Figur 1b wird die Tropfschale 6 entlang der Horizontalrichtung 9 durch einen Benutzer (nicht dargestellt) herausgezogen, wodurch sich lediglich die zweite Kopplungseinrichtung 5 löst. Der Kapselauffangbehälter 3 verbleibt daher an der übrigen Vorrichtung 1. In Figur 1c wird die Tropfschale 6 zunächst leicht angehoben und danach entlang der Horizontalrichtung 9 herausgezogen. Durch das Anheben der Tropfschale 6 löst sich die erste Koppeleinrichtung 4, während sich die dritte Koppeleinrichtung 11 schließt. Die Tropfschale 6 wird daher zusammen mit dem Kapselauffangbehälter 3 von der übrigen Vorrichtung 1 getrennt.

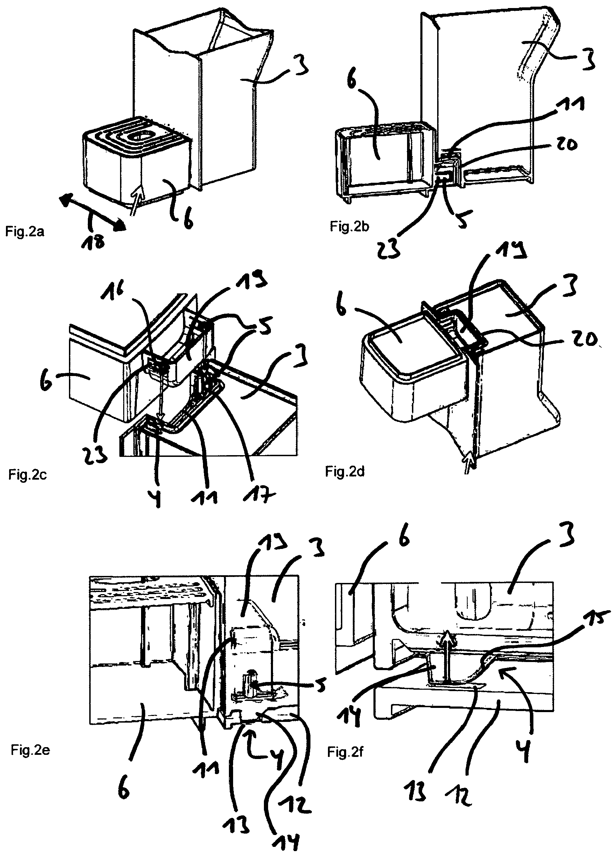

In **Figuren 2a bis 2f** sind schematische Detailansichten der Vorrichtung 1 gemäß der beispielhaften Ausführungsform der vorliegenden Erfindung dargestellt.

In Figuren 2a und 2b sind die miteinander über die zweite und dritten Kopplungseinrichtungen 5, 11 miteinander verbundene Tropfschale 6 und Kapselauffangbehälter 3 getrennt von der übrigen Vorrichtung 1 dargestellt. Es ist zu sehen, dass sowohl die Tropfschale 6 als auch der Kapselauffangbehälter 3 freistehend ausgebildet sind. Die Tropfschale 6 weist auf ihrer Oberseite ein Gitterrost auf, auf welchem das Trinkgefäß abgestellt wird.

In Figuren 2c und 2d ist die zweite Kopplungseinrichtung 5, welche durch die in die Gegenrastelemente 17 seitlich eingreifende Rastelemente 16 gebildet wird, detailliert dargestellt.

In Figuren 2e und 2f ist eine Detailansicht der ersten Kopplungseinrichtung 4 illustriert. Es ist zu sehen, dass die erste Kopplungseinrichtung 4 in Form von nach unten weisenden Rastnasen 14 mit Einführschrägen 15 ausgebildet sind, welche in die Rastöffnungen 13 eingreifen. Die Rastnasen 14 sind dabei entlang der Horizontalrichtung 9 in einem der Tropfschale 6 zugewandten vorderen Drittel des Kapselauffangbehälters 3 ausgebildet.

## Patentansprüche

1. Vorrichtung (1) zur Herstellung eines Getränks mittels einer Portionskapsel, wobei die Vorrichtung (1) eine mit einer Portionskasel (8) befüllbare Brühvorrichtung (2), einen zumindest teilweise unterhalb der Brühvorrichtung (2) angeordneten und mit einem Gehäuse (7) der Brühvorrichtung (2) mittels einer ersten Koppeleinrichtung (4) lösbar gekoppelten Kapselauffangbehälter (3) und einen mit dem Kapselauffangbehälter (3) mittels einer zweiten Koppeleinrichtung (5) lösbar gekoppelte Tropfschale (6) aufweist, **dadurch gekennzeichnet, dass** die erste und die zweite Koppeleinrichtung (4, 5) derart ausgebildet sind, dass sich bei einer Kraftbeaufschlagung der Tropfschale (6) entlang einer vom Gehäuse (7) weg gerichteten Horizontalrichtung (9) ausschließlich die zweite Koppeleinrichtung (5) löst, während sich bei einem Anheben der Tropfschale (6) entlang einer in Richtung Brühvorrichtung (2) gerichteten Vertikalrichtung (10) ausschließlich die erste Koppeleinrichtung (4) löst.

2. Vorrichtung (1) nach Anspruch 1, wobei die Vorrichtung (1) eine dritte Koppeleinrichtung (11) aufweist, welche derart ausgebildet ist, dass lediglich beim Anheben der Tropfschale (6) entlang der Vertikalrichtung (10) zusätzlich zur Kopplung der zweiten Koppeleinrichtung (5) eine Kopplung zwischen dem Kapselauffangbehälter (3) und der Tropfschale (6) mittels der dritten Koppeleinrichtung (11) herbeigeführt wird.

3. Vorrichtung (1) nach einem der vorhergehenden Ansprüche, wobei das Gehäuse (7) einen feststehenden Untersatz (12) für den Kapselauffangbehälter (3) aufweist, wobei die erste Koppeleinrichtung (4) wenigstens eine am Untersatz (12) ausgebildete Rastöffnung (13) und wenigstens eine an einer Unterseite des Kapselauffangbehälters (3) ausgebildete Rastnase (14), welche im gekoppelten Zustand entgegen der Vertikalrichtung (10) in die wenigstens eine Rastöffnung (13) eingreift, umfasst.

4. Vorrichtung (1) nach Anspruch 3, wobei die wenigstens eine Rastnase (14) auf einer dem Gehäuse (7) zugewandten Seite eine Einführschräge (15) aufweist, wobei die Rastnase (14) vorzugsweise eine entgegen der Vertikalrichtung (10) nach unten weisende Haifischzahnform aufweist.

5. Vorrichtung (1) nach einem der Ansprüche 3 oder 4, wobei die wenigstens eine Rastnase (14) entlang der Horizontalrichtung (9) in einem der Tropfschale (6) zugewandten vorderen Bereich des Kapselauffangbehälters (3), bevorzugt in der vorderen Hälfte des Kapselauffangbehälters (3) und besonders bevorzugt im vorderen Drittel des Kapselauffangbehälters (3) ausgebildet ist.

6. Vorrichtung (1) nach einem der vorhergehenden Ansprüche, wobei die erste Kopplungseinheit (4), die zweite Kopplungseinheit (5) und die dritte Kopplungseinheit (11) in Vertikalrichtung (10) einander zumindest teilweise oder vollständig überlappen.

7. Vorrichtung (1) nach einem der vorhergehenden Ansprüche, wobei die zweite Koppeleinrichtung (5) wenigstens ein an der Tropfschale (6) ausgebildetes Rastelement (16) und ein am Kapselauffangbehälter (3) ausgebildetes Gegenrastelement (17) umfasst, wobei im gekoppelten Zustand das Rastelement (16) entlang einer sowohl zur Horizontalrichtung (9) als auch zur Vertikalrichtung (10) senkrechten Querrichtung (18) in das Gegenrastelement (17) formschlüssig eingreift.

8. Vorrichtung (1) nach Anspruch 7, wobei die Tropfschale (6) einen Vorsprung (19) aufweist, welcher im gekoppelten Zustand der zweiten Koppeleinrichtung (5) in eine an der Front des Kapselauffangbehälters (3) ausgebildeten Öffnung (20) eingeschoben ist, wobei an jeder Seite des Vorsprungs (19) jeweils ein Rastelement (16) ausgebildet ist und wobei in einer seitlichen Wandung der Öffnung (20) jeweils eine Gegenrastelement (17) in Form einer Ausnehmung und insbesondere einer vertikal verlaufenden Nut ausgebildet ist.

9. Vorrichtung (1) nach Anspruch 8, wobei zur Bildung der dritten Koppeleinrichtung (11) der Vorsprung (19) auf seiner Oberseite eine Auswölbung (21) und die Wandung der Öffnung (20) an seiner oberen Vorderkante einen Hinterschnitt (22) derart umfasst, dass nur bei einem Anheben der Tropfschale (6) entlang der Vertikalrichtung (10) die Auswölbung (21) den Hinterschnitt (22) hintergreift und gegenüber der Horizontalrichtung (9) einen Formschluss bewirkt.

10. Vorrichtung (1) nach einem der Ansprüche 8 oder 9, wobei die beiden Rastelemente (16) jeweils an einem in die seitliche Wandung des Vorsprungs (19) eingelassenen federelastisch ausgebildeten Seitenarm (23) angeordnet sind.

## Claims

1. Apparatus (1) for preparing a beverage using a portion capsule, wherein the apparatus (1) has a brewing apparatus (2) which can be filled with a portion capsule (8), a capsule collection container (3) which is arranged at least partially beneath the brewing apparatus (2) and is coupled in a detachable manner to a housing (7) of the brewing apparatus (2) by means of a first coupling device (4), and a drip tray (6) which is coupled in a detachable manner to the capsule collection container (3) by means of a second coupling device (5), **characterized in that** the first and the second coupling device (4, 5) are designed in such a way that only the second coupling device (5) becomes detached when force is applied to the drip tray (6) along a horizontal direction (9) which is directed away from the housing (7), while only the first coupling device (4) becomes detached when the drip tray (6) is lifted along a vertical direction (10) which is directed in the direction of the brewing apparatus (2).

2. Apparatus (1) according to Claim 1, wherein the apparatus (1) has a third coupling device (11) which is designed in such a way that, in addition to coupling of the second coupling device (5), coupling between the capsule collection container (3) and the drip tray (6) is effected by means of the third coupling device (11) only when the drip tray (6) is lifted along the vertical direction (10).

3. Apparatus (1) according to either of the preceding claims, wherein the housing (7) has a stationary base (12) for the capsule collection container (3), wherein the first coupling device (4) comprises at least one latching opening (13), which is formed on the base (12), and at least one latching lug (14) which is formed on a bottom side of the capsule collection container (3) and which, in the coupled state, engages into the at least one latching opening (13) against the vertical direction (10) .

4. Apparatus (1) according to Claim 3, wherein the at least one latching lug (14), on a side which faces the housing (7), has an insertion bevel (15), wherein the latching lug (14) preferably has a shark-tooth shape which points downwards against the vertical direction (10) .

5. Apparatus (1) according to either of Claims 3 and 4, wherein the at least one latching lug (14) is formed along the horizontal direction (9) in a front region of the capsule collection container (3), which front region faces the drip tray (6), preferably in the front half of the capsule collection container (3) and particularly preferably in the front third of the capsule collection container (3).

6. Apparatus (1) according to one of the preceding claims, wherein the first coupling unit (4), the second coupling unit (5) and the third coupling unit (11) at least partially or completely overlap in the vertical direction (10).

7. Apparatus (1) according to one of the preceding claims, wherein the second coupling device (5) comprises at least one latching element (16) which is formed on the drip tray (6) and a mating latching element (17) which is formed on the capsule collection container (3), wherein, in the coupled state, the latching element (16) engages in an interlocking manner into the mating latching element (17) along a transverse direction (18) which is perpendicular both to the horizontal direction (9) and also to the vertical direction (10).

8. Apparatus (1) according to Claim 7, wherein the drip tray (6) has a projection (19) which, in the coupled state of the second coupling device (5), is pushed into an opening (20) which is formed on the front of the capsule collection container (3), wherein a latching element (16) is formed on each side of the projection (19) in each case, and wherein a mating latching element (17) in the form of a recess, and in particular a vertically running groove, is formed in a side wall of the opening (20) in each case.

9. Apparatus (1) according to Claim 8, wherein, in order to form the third coupling device (11), the projection (19), on its top side, comprises a convex portion (21) and the wall of the opening (20), on its top front edge, comprises an undercut (22) in such a way that the convex portion (21) engages behind the undercut (22) and produces an interlocking connection in relation to the horizontal direction (9) only when the drip tray (6) is lifted along the vertical direction (10).

10. Apparatus (1) according to either of Claims 8 and 9, wherein the two latching elements (16) are each arranged on a side arm (23) of spring-elastic design which is made in the side wall of the projection (19).

## Revendications

1. Ensemble (1) de préparation d'une boisson au moyen d'une portion en capsule, l'ensemble (1) présentant un ensemble de percolation (2) dans lequel une portion en capsule (8) peut être placée, un réceptacle (3) de reprise de capsule disposé au moins en partie en dessous de l'ensemble de percolation (2) et raccordé de manière libérable à un boîtier (7) de l'ensemble de percolation (2) au moyen d'un premier dispositif de raccordement (4), ainsi qu'une coquille d'égouttage (6) raccordée de manière libérable au réceptacle (3) de reprise de capsule au moyen d'un deuxième dispositif de raccordement (5),
**caractérisé en ce que**
le premier et le deuxième dispositif de raccordement (4, 5) sont configurés de telle sorte que lorsqu'une force est appliquée sur la coquille d'égouttage (6) dans une direction horizontale (9) s'éloignant du boîtier (7), seul le deuxième dispositif de raccordement (5) se détache tandis que lorsque la coquille d'égouttage (6) est relevée dans une direction verticale (10) dirigée vers l'ensemble de percolation (2), seul le premier dispositif de raccordement (4) se détache.

2. Ensemble (1) selon la revendication 1, dans lequel l'ensemble (1) présente un troisième dispositif de raccordement (11) configuré de telle sorte qu'un raccordement entre le réceptacle (3) de reprise de capsule et la coquille d'égouttage (6) est réalisé au moyen du troisième dispositif de raccordement (11) en plus du raccordement du deuxième dispositif de raccordement (5) uniquement lorsque la coquille d'égouttage (6) est relevée dans la direction verticale (10) .

3. Ensemble (1) selon l'une des revendications précédentes, dans lequel le boîtier (7) présente un soubassement fixe (12) pour le réceptacle (3) de reprise de capsule, le premier dispositif de raccordement (4) comportant au moins une ouverture d'encliquetage (13) formée sur le soubassement (12) et au moins un bec d'encliquetage (14) formé sur le côté inférieur du réceptacle (3) de reprise de capsule et qui, en position raccordée, s'engage dans la ou les ouvertures d'encliquetage (13) en opposition à la direction verticale (10).

4. Ensemble (1) selon la revendication 3, dans lequel le ou les becs d'encliquetage (14) présentent une rampe d'insertion (15) sur un côté tourné vers le boîtier (7), le bec d'encliquetage (14) présentant de préférence la forme de dents de requin orientées vers le bas dans la direction opposée à la direction verticale (10).

5. Ensemble (1) selon l'une des revendications 3 ou 4, dans lequel le ou les becs d'encliquetage (14) sont formés dans la direction horizontale (9) dans une partie avant du réceptacle (3) de reprise de capsule et vers la coquille d'égouttage (6), de préférence dans la moitié avant du réceptacle (3) de reprise de capsule et de façon particulièrement préférable dans le tiers avant du réceptacle (3) de reprise de capsule.

6. Ensemble (1) selon l'une des revendications précédentes, dans lequel la première unité de raccordement (4), la deuxième unité de raccordement (5) et la troisième unité de raccordement (11) se superposent au moins en partie ou complètement dans la direction verticale (10).

7. Ensemble (1) selon l'une des revendications précédentes, dans lequel le deuxième dispositif de raccordement (5) comporte au moins un élément d'encliquetage (16) formé sur la coquille d'égouttage (6) et un élément complémentaire d'encliquetage (17) formé sur le réceptacle (3) de reprise de capsule, et dans lequel à l'état raccordé, l'élément d'encliquetage (16) s'engage en correspondance géométrique dans l'élément complémentaire d'encliquetage (17) dans une direction transversale (18) perpendiculaire à la fois à la direction horizontale (9) et à la direction verticale (10).

8. Ensemble (1) selon la revendication 7, dans lequel la coquille d'égouttage (6) présente une saillie (19) qui, lorsque le deuxième dispositif de raccordement (5) est en position raccordée, est insérée dans une ouverture (20) formée à l'avant du réceptacle (3) de reprise de capsule, un élément d'encliquetage (16) étant formé sur chaque côté de la saillie (19) et un élément complémentaire d'encliquetage (17) présentant la forme d'une découpe et en particulier d'une rainure s'étendant à la verticale étant formé dans une paroi latérale de l'ouverture (20).

9. Ensemble (1) selon la revendication 8, dans lequel pour former le troisième dispositif de raccordement (11), la saillie (19) comporte sur son côté supérieur un bombement (21) et la paroi de l'ouverture (20) présente sur son bord supérieur avant une contre-dépouille (22) de telle sorte que le bombement (21) n'engage la contre-dépouille (22) que lorsque la coquille d'égouttage (6) est relevée dans la direction verticale (10) et a pour effet une mise en correspondance géométrique dans la direction horizontale (9).

10. Ensemble (1) selon l'une des revendications 8 ou 9, dans lequel chacun des deux éléments d'encliquetage (16) est disposé sur un bras latéral élastique (23) ménagé dans la paroi latérale de la saillie (19).
